# EUROPEAN PATENT SPECIFICATION

(11) **EP 3 914 978 B1**
(45) Date of publication and mention of the grant of the patent: **29.11.2023**
(21) Application number: 20700510.9
(22) Date of filing: 16.01.2020
(51) Int. Cl.: G05B 19/418, E04H 5/02

(54) **AUTOMATED CREATION OF MODULAR INDUSTRIAL PLANTS**
AUTOMATISIERTE ERSTELLUNG VON MODULAREN INDUSTRIELLEN ANLAGEN
CRÉATION AUTOMATISÉE D'INSTALLATIONS INDUSTRIELLES MODULAIRES

(30) Priority: 24.01.2019 EP 19153610
(43) Date of publication of application: 01.12.2021
(73) Proprietor: ABB Schweiz AG, 5400 Baden (CH)
(72) Inventor: HOERNICKE, Mario, 76829 Landau (DE); STARK, Katharina, 69469 Weinheim (DE); SCHULZ, Dirk, 67149 Meckenheim (DE); JETLEY, Raoul, Mahadevapura, Bangalore, Karnataka 560048 (IN)
(74) Representative: Maiwald GmbH
(86) International application number: PCT/EP2020/051036
(87) International publication number: WO 2020/152025

(56) References cited:
- EP-A1- 3 318 935
- EP-A2- 1 416 408
- WO-A1-02/42712
- DE-A1- 19 747 574

## Description

The invention relates to the automated and flexible creation of industrial plants that are to execute a given industrial process from discrete modules that provide capabilities to perform specific actions.

### Background

In many industrial applications, there is a need to quickly reconfigure plants from one production process to another production process. For example, the product that is being produced may be under quick evolution, and every improvement in quality is to be brought into the production process as quickly as possible to maximize customer satisfaction. There are also some products that are so concentrated in terms of end effect per unit mass or volume that a year's supply may be produced in only a few weeks' time. Pharmaceutical compositions, which are delivered to patients in doses on the order of a few ten or a few hundred milligrams, are prime examples of such products.

Plants for manufacturing such compositions may be assembled as modular plants from self-contained modules that take in one or more educts on one or more input ports, process the one or more educts to one or more products by performing one or more physical and/or chemical actions, and deliver the one or more products on one or more output ports. The modules are linked together in a temporary manner for the time during which production of one a particular compound is desired. When production of this compound is finished and production of the next compound is desired, the modules are uncoupled from one another, so that they can be re-used in a different configuration. EP 3 318 935 A1 discloses an exemplary method of operating a physical process module in a modular process plant.

Presently, creating a construction plan for a modular plant that performs a given industrial process is a human engineering task.

EP 1 416 408 A2 discloses a method for planning a production process. This method is to change the behaviour of an existing arrangement of reconfigurable modules when the plant has finished one job and is about to start the next job that has different requirements.

DE 197 47 574 A1 discloses a similar method for production planning and dynamic configuration of an existing modular plant.

WO 02/42712 A1 discloses the generic concept of a modular plant, and in particular an industrial power plant, wherein a module may comprise multiple functional devices.

EP 3 318 935 A1 discloses discloses a method to make existing process modules smart. Inter alia, this method comprises mounting a micro controller on the module.

### Objectives of the invention

It is an objective of the invention to at least partially automate the process of creating such a construction plan, while at the same time improving the quality of the resulting modular plant. It is also an objective of the invention to determine whether a plant built according to a so-created construction plan, or according to a construction plan obtained from another source, is able to fulfil its intended function in view of required constraints of the modules involved.

These objectives are achieved by a method for generating a construction plan, a method for manufacturing an industrial plant according to such a construction plan, and a method for verifying the feasibility of a given temporal execution sequence of actions. Further advantageous embodiments are detailed in the respective dependent claims.

### Disclosure of the invention

The invention is defined by the appended claims. Embodiments and examples not covered by the claims are presented to illustrate, and facilitate the understanding of, the claimed invention.

The invention provides a method for generating a construction plan for a modular plant that is to execute a given industrial process. The modular plant is to be built from physical process modules that are linked in a reversible manner, so that the plant may be disassembled and the modules re-used when the task of the plant is finished.

A flow chart of the industrial process is provided. This flow chart comprises a sequence of actions that each have at least one input for an educt to be processed by this action and at least one output for a product produced by the action. For example, an action of sieving, separating solid from fluid, distilling or otherwise separating materials from a mixture has at least one input for the mixture and two or more outputs for the separated constituents of the mixture. An action of mixing has multiple inputs for the to-be-mixed constituents and at least one output for the mixture. An action of stirring, tempering or shaking has at least one input and at least one output. The actions may have any level of granularity. For example, an action of leaching may be expressed in the flow chart as one action with one or more inputs for a mixture, a first output for solid material and a second output for fluid material. But the action of leaching may also be decomposed into smaller actions, namely heating to the desired temperature, stirring, and separating solid from fluid.

The flow chart may be generated by the process engineer who wants to implement a process. However, this is not mandatory. Rather, the flow chart may also be generated based on an existing modular plant and a temporal sequence of execution associated with this plant. The existing state of the plant can then be used as a starting point for a further optimization. For example, modules or actions may be replaced in order to perform the same functions, but faster or in a more efficient way in terms of materials or energy.

At least one catalogue of module descriptions is provided. Each module description characterizes at least the educt inputs and the product outputs of at least one physical process module, as well as the physical actions performed within the physical process module.

The flow chart is decomposed into functional units with at least one educt input, at least one product output and one or more actions leading from the one or more educts to the one or more products. Again, this may be done at any desired level of granularity. For example, leaching may appear as one single functional unit or as a combination of heating, stirring and separating. This reflects that the physical process modules are available in different granularities as well. E.g., for leaching, an all-in-one module may be used, but similar functionality may also be realized by a combination of a stirring module, a heating module and a separating module.

The catalogue is searched for module descriptions that match to functional units in the sense that the process module to which the module description pertains is physically able to convert the at least one educt of the functional unit to the product of the functional unit by means of the one or more actions of the functional unit. For example, a reactor with heating and stirring means matches to the functional unit of leaching.

For each functional unit for which at least one matching module description is found, the corresponding physical process module is inserted into the construction plan. The physical process modules are interconnected like the functional units to which they correspond. Here, "inserting a physical process module into a construction plan" is shorthand for amending the construction plan so that it stipulates that the physical process module is to be inserted into the plant in a particular place when the plant is realized according to this construction plan.

The inventors have found that automating the generation of the construction plan in this manner has at least the following advantages.

The flow chart is a human-readable description of the to-be-performed industrial process that is available on the side of the specialist for this process. Starting from this, the need to consult a separate automation specialist is considerably lessened, or even completely obviated. The knowledge that the automation specialist previously applied is mostly condensed in the catalogue of module descriptions. If the searching of the catalogue and the inserting of physical process modules into the construction plan are computerized, changes to the industrial process may be implemented in the plant with a much faster turnaround time even without an automation specialist on site.

Moreover, the computerized generation of the construction plan opens the door to improving the quality and performance of the resulting plant. The range of available physical process modules is vast and growing all the time. Very frequently, there will be more than one possibility to realize a given functionality. For example, several manufacturers may offer different all-in-one reactor modules that may be used for leaching. Also, there are choices to be made whether to use such all-in-one modules or whether to assemble their functionality from specialized sub-modules (e.g., for heating, stirring and separating). Previously, all these choices were made by the automation specialist based mainly on experience. This meant that starting from one and the same flow chart, different automation specialists could produce different construction plans due to their different experience. By contrast, if the construction plan is generated by computer, this may be done according to any suitable quantitative criteria in a much more reproducible manner. Specifically, trade-offs between different goals may be made in a much better motivated manner.

For the mentioned advantages to appear, it is not required that the entire construction plan is successfully generated from physical process modules for which corresponding module descriptions are found in the catalogue. There may be cases in which no matching module description is found for a certain functional unit. Instead of an actual physical process module, a placeholder may then be inserted into the construction plan. This placeholder may be exchanged later after the required module description has been added to the catalogue. For example, new module types from a different supplier may be merged into the catalogue, or a new physical process module may be developed from scratch. For all functional units that can be successfully mapped to physical process modules, however, the work is already done. So the automatable part of the design work is always done automatically, and any remaining manual effort is focused onto functional units where it is really needed, irrespective of the concrete percentage of the functional units that may be successfully mapped.

In a specially advantageous embodiment, the searching is first performed in a first catalogue of module descriptions corresponding to physical process modules that are available with a first shorter delay, and/or at a first lower cost, and if no module description matching a particular functional unit is found, the searching moves on to a second catalogue of module descriptions corresponding to physical process modules that are available with a second longer delay, and/or at a second higher cost.

For example, the building of a modular plant may frequently start from a situation where a certain set of physical process modules is already available on-site. Priority may then be given to first use such readily available modules and only procure more modules from outside if the task cannot be accomplished with these readily available modules. Also, when procuring modules from outside, they may have different prices or delivery delays.

According to the invention, at least one functional unit comprises more than one action, and if no module description corresponding to this functional unit is found in the catalogue, this functional unit is further decomposed into at least two smaller functional units, and the catalogue is searched for module descriptions corresponding to these smaller functional units.

For example, the generation of the construction plan may be driven by the goal to assemble the plant from as few modules as possible. This means that the functional units that are mapped to individual physical process modules should be as large as possible. So the size of the functional units into which the flow chart is decomposed may initially be set quite large. In this manner, it may be detected whether all-in-one process modules that combine a certain number of different actions are available, and preference may be given to using such all-in-one modules. Functional units for which no large all-in-one module is found may then be decomposed into smaller functional units. I.e., the size of combined all-in-one modules for which the catalogue is searched may be progressively decreased. Because the matching is done by computer, even a "brute-force" approach is feasible, where initially the whole plant is regarded as one single functional unit comprising all N actions of the plant, and then the decomposition of the flow chart moves on to functional units of size N-1, N-2, and so on.

In a further specially advantageous embodiment, the method further comprises: in response to determining that the delay, and/or the cost, for obtaining a particular physical process module fulfils a predetermined condition, determining whether this physical process module can be replaced by another physical process module, or a combination of physical process modules, that has the same educt inputs and the same product outputs, and that is physically able to perform the actions of said particular physical process module.

For example, the general goal of the construction plan may be to make up the plant from as few separate physical process modules as possible, and/or the concrete choice of physical process modules may be driven by certain quantitative quality criteria. But it may then turn out that the desired physical process module is currently unavailable because of a shortage in supply, and the delay for procuring this module may be a limiting factor for the date on which the finished plant may go online. This may trigger, for example, a replacement of the desired module by a makeshift combination of modules that are available on-site. Such makeshift combination may not work as perfectly as the desired module, but this may be a lesser evil than the plant not going online at all.

In a further specially advantageous embodiment, the method further comprises: if multiple module descriptions matching to the same functional unit are found in the catalogue, assigning priorities to these module descriptions according to at least one predetermined criterion, and choosing the physical process module corresponding to the module description with the highest priority for including in the construction plan.

In this manner, as mentioned before, the design of the plant according to a set of goals may be put onto a quantitative basis, and therefore made more reproducible. Specifically, arbitrary trade-offs between different goals may be set.

Advantageously, the priority may be based at least in part on one or more of:
- the cost of the use of the physical process module,
- the delay for obtaining the physical process module,
- the mean time between failures, MTBF, of the physical process module,
- the mean time to failure, MTTF, of the physical process module, and
- an intention to use same-type modules for similar purposes throughout the plant.

Specifically, basing the priority on the MTBF or MTTF of a physical process module is advantageous for functional units that are critical for the to-be-performed industrial process in some way. While the failure of any physical process module may affect the ability of the plant as a whole to perform its intended function, the consequences of the failure may be more severe for certain physical process modules than they are for other physical process modules. For example, when manufacturing pharmaceutical compositions, an interruption of the process due to the failure of a physical process module may cause an entire batch to be lost. If a module near the beginning of the process fails, then the raw materials may be lost, but not much work is lost. If a module near the end of the process fails, on top of losing the raw materials, all the work that has already gone into the batch is lost as well.

Using same-type modules for similar purposes throughout the plant permits to speedily replace a module in case of a failure. It is also particularly advantageous if the plant is to be reconfigured for the manufacturing of a new product very often. For example, a manufacturer of different pharmaceutical compounds may first manufacture a year's supply of product A, then a year's supply of product B, and then a year's supply of product C. If same-type modules are used for similar purposes, then the total number and cost of physical process modules that are needed to produce the three products A, B and C in succession may be decreased. I.e., it becomes more likely that the manufacturing processes for products A, B and C will be able to share certain physical process modules.

Advantageously, the priority decreases as at least one quantitative capability of the physical process module exceeds a requirement of the functional unit for this capability. In this manner, the probability is reduced that a higher-featured module is unavailable for its intended purpose because it is being used for a lesser purpose that could also have been filled by a lesser-featured module.

For example, when heating a mixture to 500°C is required, and a heater with a maximum temperature of 600°C and a heater with a maximum temperature of 1500°C are both available on-site, then either of them may be used to heat the mixture to 500°C. But if some other functional unit in the process requires heating some other mixture to 1300°C, then it is a mistake to use the 1500°C heater for heating the first mixture to 500°C, because this heater will then not be available for heating the second mixture to 1300°C, causing another heater to be needed.

In a further specially advantageous embodiment, at least one module description comprises limits for a quantity flow of at least one educt and/or product, and wherein the flow chart comprises limits for a quantity flow of at least one educt and/or product with respect to at least one functional unit.

Most applications where modular industrial plants are used are driven by a goal not just to produce a certain product, but to produce a specific quantity of this product per unit time. Given the flow chart, a goal for the quantity flow of the final product determines the quantity flows of all the intermediate products in the manufacturing process, and ultimately also the intake of raw materials. The catalogue of module descriptions may comprise modules that qualitatively perform the same action, but differ by orders of magnitude as to the quantity flow of material that may be processed. This quantity flow may therefore be an important factor in the choice of the physical process module for a given action.

In a further specially advantageous embodiment, the method further comprises: in response to determining that at least one module description matches to a functional unit with respect to educt inputs, product outputs and ability to convert, but a maximum quantity flow of the module to which the module description pertains is less than a minimum quantity flow requirement for the functional unit, entering, into the construction plan, with respect to this functional unit, a parallel arrangement of multiple physical process modules having the same educt inputs, product outputs, and ability to convert.

In this manner, a wider range of quantity flows can be accommodated by using one and the same physical process module. Specifically, the use of same-type modules for similar purposes throughout the plant is facilitated.

In a further specially advantageous embodiment, the module descriptions further comprise a Boolean in-use indicator. The searching in the catalogue is limited to module descriptions where the value of the in-use indicator is False. The method further comprises:
- in response to determining that the plant is to be built according to the construction plan, setting the in-use indicator in all module descriptions corresponding to the physical process modules contained in the construction plan to True; and
- in response to determining that use of the plant is discontinued and the physical process modules that make up the plant are available for use again, setting the in-use indicator in all module descriptions corresponding to these physical process modules to False.

In this manner, the switching from the production of one product A to the production of a different product B or C by reconfiguring the plant and re-using modules is greatly facilitated. On a site where there is a certain given stock of physical process modules readily available, there may be a need to run several production processes with modular plants in parallel. In this case, the choice of a concrete physical process module for performing a concrete action in one of the production processes not only depends on the requirements of this one production process, but also on which modules are already being used by other production processes.

An in-use indicator may also take other forms. For example, each module description may comprise, or point to, one or more reservations of the corresponding physical process module for a specific timeframe. The searching may then be limited to module descriptions of modules that are, according to the already existing reservations, still available within a desired timeframe during which the to-be-constructed plant is intended to be built and used. In response to determining that the plant according to the construction plan is to be built and used within the desired timeframe, reservations for all physical process modules contained in the construction plan may be made for the desired timeframe. In response to determining that use of the plant is discontinued and the physical process modules that make up the plant are available for use again before the end of the desired timeframe, the reservations for these modules may be cancelled for the remainder of that timeframe.

In a further specially advantageous embodiment, the flow chart, and/or at least one module description, comprises a time required for completing at least one action. This facilitates creating, from the construction plan, a temporal execution sequence of the actions.

The temporal execution sequence comprises, for each functional unit as derived from the flow chart, executing the actions defined in the corresponding modules in the construction plan. From the educt requirements of each process module, it may then be automatically determined which actions may be performed in parallel and which actions need to wait for each other.

For example, when a mixture has been separated into its constituents and these constituents need to be heated to different temperatures, then the constituents may be heated independently from one another in different physical process modules. But the polymerizing of a mixture by heat treatment in a vessel requires that the constituents of the mixture are present in the vessel in the right proportion before the heat treatment is applied.

In a further specially advantageous embodiment, the catalogue comprises module descriptions that contain, for each action performed by the corresponding physical process module, constraints as to an educt input, a product output, an internal state of the physical process module, or a state of the plant as a whole, that have to be met while each action of the physical process module is being performed.

In this manner, when generating the construction plan, and/or when creating the temporal execution sequence, it can be automatically checked whether any such constraints are violated. Specifically, when two physical process modules are linked in the sense that the product of the one is the educt of the other, a need may arise to bring two sets of constraints into alignment somehow. Should it turn out that the constraints for the two modules are contradictory, then this combination of modules cannot be used.

For example, the constraints may comprise one or more of:
- a temperature, pressure, mass flow, state of matter or chemical composition of an educt, a product or any other intermediate medium that is obtained during an action leading from the educt to the product;
- a switching state of a switch or a valve of the physical process module;
- a movable state of a movable member within the physical process module;
- a maximum consumption rate of any consumable by the physical process module, and/or by the plant as a whole;
- an environmental condition within the physical process module, and/or within the plant as a whole.

For example, if the one module emits its product as a solid, but the module which takes this product as its educt requires this educt to be a liquid, then the two sets of constraints of the two modules are contradictory, i.e., they cannot both be fulfilled at the same time.

Contradictions may also arise between different actions within one single physical process module. In a complex physical process module, the use of certain equipment or features is shared between different functions. For example, one action of the physical process module may require that a certain valve is open, while another action of this physical process module may require that the same valve is closed. Both states cannot be realized at the same time.

Interactions leading to contradictions between sets of constraints may also be indirect. For example, a first action of a physical process module may require that the temperature inside the module is below a certain value. A second action of the same module may be independent from the first one as far as educts and products are concerned, but it may generate heat that drives up the temperature inside the module above the maximum permissible temperature for the first action.

Similarly, such indirect interactions leading to contradictions may also propagate across the boundaries between physical process modules. For example, a first reactor module may require that there are no vibrations, so that a liquid within this reactor may solidify in the form of a single crystal. But a second reactor in the plant may require that its liquid contents be constantly stirred. The processes in the two reactors may be prima facie independent, but when the stirrer in the second reactor is on, the vibrations propagate to the first reactor and introduce defects into the crystal.

Especially such indirect interactions are very hard, if not impossible, to keep track of when manually designing a modular plant.

In a further specially advantageous embodiment, the method further comprises:
- determining, for each pair of a first action performed by a first physical process module and a second action performed by the first physical process module, and/or by a second physical process module connected to the first physical process module, whether the constraints required by both actions are contradictory; and
- in response to determining that the constraints are not contradictory, adding the pair of the two actions to a positive list of pairs of actions that are available for creation of the temporal execution sequence.

Specifically, for each of the first action and the second action, a search may be performed which process equipment is on the respective process path. For example, this search may be performed starting from all connected ports of the physical process module. The search may end at vessels or pipe junctions, because after those items, the equipment does not have direct influence on the pipes connected to the port.

The invention also provides a method for manufacturing an industrial plant to execute a given industrial process. The method comprises: generating a construction plan for the industrial plant using the method described above, and physically connecting the physical process modules contained in the generated construction plan, so that the industrial plant results.

As described above, the manufacturing of the plant can be done quicker and with less manual effort even without having an automation engineer on-site. At the same time, the quality of the resulting plant with respect to arbitrary quality criteria may be improved. Changes to the plant may be made with a much faster turnaround time.

The invention also provides a method for verifying the feasibility of a given temporal execution sequence of actions in a given industrial plant. The industrial plant consists of a plurality of physical process modules. Each physical process module has at least one educt input and at least one product output, and it is able to perform at least one action to convert the at least one educt into the at least one product.

The method comprises obtaining, according to the invention, a construction plan that contains the physical process module and their interconnections. For example, the construction plan, and/or the temporal execution sequence, may be determined according to the method described above. But the construction plan and the temporal execution sequence may also come from any other source. For example, the construction plan of an already existing plant may be imported in order to test new temporal execution sequences for feasibility.

For each physical process module, a module description is obtained that contains, for each action performed by the physical process module, constraints as to an educt input, a product output, an internal state of the physical process module, or a state of the plant as a whole, that have to be met while each action of the physical process module is being performed. If the physical process module is present in the construction plan by virtue of a module description from a catalogue matching a functional unit of the flow chart of the process as described above, then this module description may be directly usable. If the information regarding constraints is missing in this module description, it may be augmented by reading in a more detailed module description from any other source.

From the temporal execution sequence of actions, the interconnections in the construction plan, and the module descriptions, a timeline of the constraints that have to be met is generated. It is determined whether this timeline contains contradictory requirements, i.e., requirements that cannot be met at the same time, for any point in time. If the timeline contains no such contradictory constraints, it is determined that the given temporal execution sequence is feasible.

Like the first method described above, this method is computerized. Specifically, it can run without the intervention of an automation expert. This means that a large number of temporal execution sequences may be tested. It is even possible to adopt a "brute-force" approach of setting up all possible temporal execution sections for a plant with a given set of modules in an initial list and culling, from this list, all sequences that are found not to be feasible.

As detailed above, many of the advantages of the methods are brought about by the computerization of the methods. Therefore, the invention also provides a computer program with machine-readable instructions that, when executed by one or more computers, and/or an industrial control system, cause the cone or more computers, and/or the industrial control system, to perform one of the methods described above. The invention also provides a non-transitory computer storage medium, and/or a download product, with this computer program.

### Description of the Figures

In the following, the invention is illustrated using Figures without any intention to limit the scope of the invention. The Figures show:
Figure 1: Exemplary embodiment of the method 100 for generating a construction plan 1a for a modular plant 1;
Figure 2: Exemplary flow chart 2 of the to-be-executed industrial process, decomposed into functional units 31-36;
Figure 3: Exemplary catalogue 4 of module descriptions 41-46 that describe physical process modules 51-56;
Figure 4: Exemplary temporal sequence 7 of the actions 21-28;
Figure 5: Exemplary embodiment of the method 200 for manufacturing an industrial plant 1;
Figure 6: Exemplary embodiment of the method 300 for verifying the feasibility of a temporal execution sequence 7 of actions 21-28.

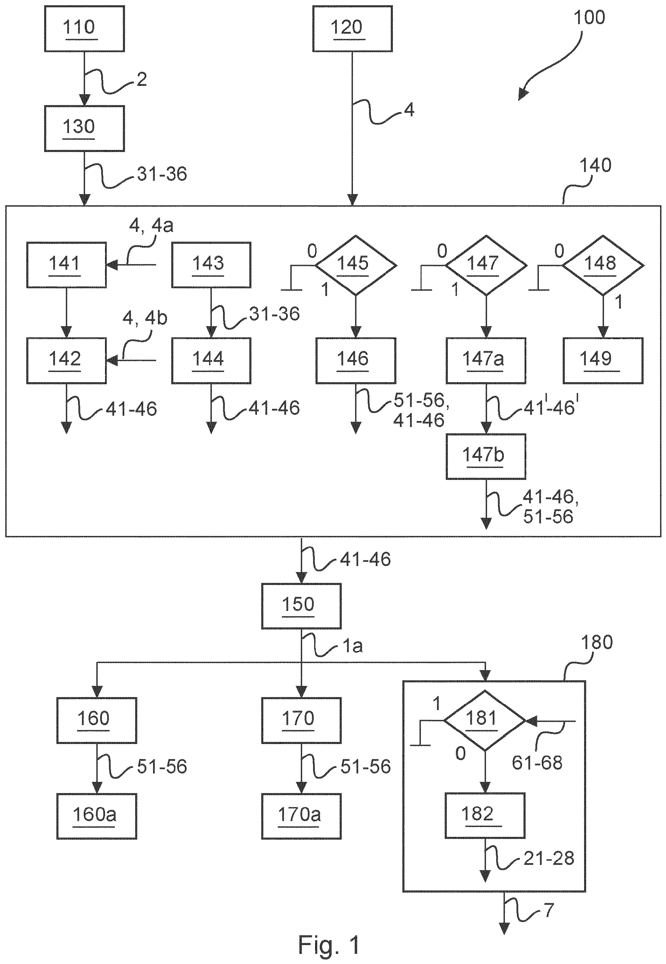

Figure 1 is a flow chart of an exemplary embodiment of the method 100 for generating a construction plan 1a for a modular industrial plant 1. In step 110, the flow chart 2 of the to-be executed industrial process is provided. This is decomposed into functional units 31-36 in step 130. In step 120, at least one catalogue 4 of module descriptions 41-46 is provided. The module descriptions 41-46 characterize physical process modules 51-56.

In step 140, the at least one catalogue 4 is searched for module descriptions 41-46 that match to the functional units 31-36. Within the box denoting step 140, several embodiments and refinements of obtaining the proper module descriptions 41-46 are given.

According to block 141, the search may initially be limited to a first catalogue 4a of module descriptions 41-46. The module descriptions 41-46 in this first catalogue 4a correspond to physical process modules 51-56 that are advantageous with respect to their cost, and/or with respect to the delay with which they may be obtained. Insofar no such module description 41-46 can be found for a particular functional unit 31-36, the search then moves on to a second catalogue 4b of module descriptions 41-46 that are less advantageous with respect to cost and/or delay, according to block 142.

According to block 143, a functional unit 31-36 for which no matching module description 41-46 is found in the catalogue 4 is further decomposed into at least two smaller functional units 31-36. According to block 144, the catalogue 4 is then searched for module descriptions 41-46 corresponding to these smaller functional units 31-36.

According to diamond 145, it is determined whether the delay, and/or the cost, for obtaining a particular physical process module 51-56 that is envisaged to be used in the plant 1 fulfils a predetermined condition. For example, such a condition may be that an upper threshold is exceeded. If this is the case (truth value 1 at diamond 145), according to block 146, it is determined whether this physical process module 51-56 can be replaced by another physical process module 51-56, or a combination of multiple such modules 51-56, that can perform the same function. If this is the case, corresponding module descriptions 41-46 are output.

According to diamond 147, it is determined whether multiple module descriptions 41-46 matching to the same functional unit 31-36 are found in the catalogue 4. If this is the case (truth value 1 at diamond 147), according to block 147a, priorities 41'-46' are assigned to the module descriptions 41-46 according to at least one predetermined criterion. According to block 147b, the physical processing module 51-56 corresponding to the module description 41-46 with the highest priority 41'-46' is chosen for including in the construction plan 1a.

According to diamond 148, it is determined whether there is a situation where a module description 41-46 matches qualitatively to a functional unit 31-36, but the quantity flow that the corresponding physical process module 149 can process is insufficient. If this is the case (truth value 1 at diamond 148), according to block 149, multiple such modules are used to meet the quantity requirement.

In step 150, for each functional unit 31-36 for which at least one matching module description 41-46 has been found, the corresponding physical process module 51-56 is inserted into the construction plan 1a, so that at least a partial construction plan 1a results. The construction plan 1a may still contain placeholders for functional units 31-36 for which no module description 41-46 has been found. But as discussed before, even in this case, the generation of the plant 1 has been facilitated by a great deal already.

In step 160, it may be determined that the plant 1 is to be built according to said construction plan 1a. In response to this, in step 160a, an in-use indicator may be set to True in all module descriptions 41-46 of physical process modules 51-56 that are used in the plant. In step 170, it may be determined that the use of the plant 1 is discontinued, and the physical process modules 51-56 are available for use again, the in-use indicators in the module descriptions 41-46 are set to False again. If the search 140 honors the in-use indicator, this ensures that on a site where multiple modular plants 1 are to be created from a certain stock of physical process modules 51-56, a single physical process module 51-56 is not planned to be used by multiple such plants 1 at the same time.

In step 180, a temporal execution sequence 7 of the actions 21-28 performed by the physical process modules 51-56 may be generated from the construction plan. This may involve a check in diamond 181 whether constraints 61-68 that are required by actions 21-28 to be performed within the same module, and/or in connected modules, are contradictory. If this is not the case, the respective actions 21-28 may be performed together, and they are made available in block 182 for creation of the temporal execution sequence 7.

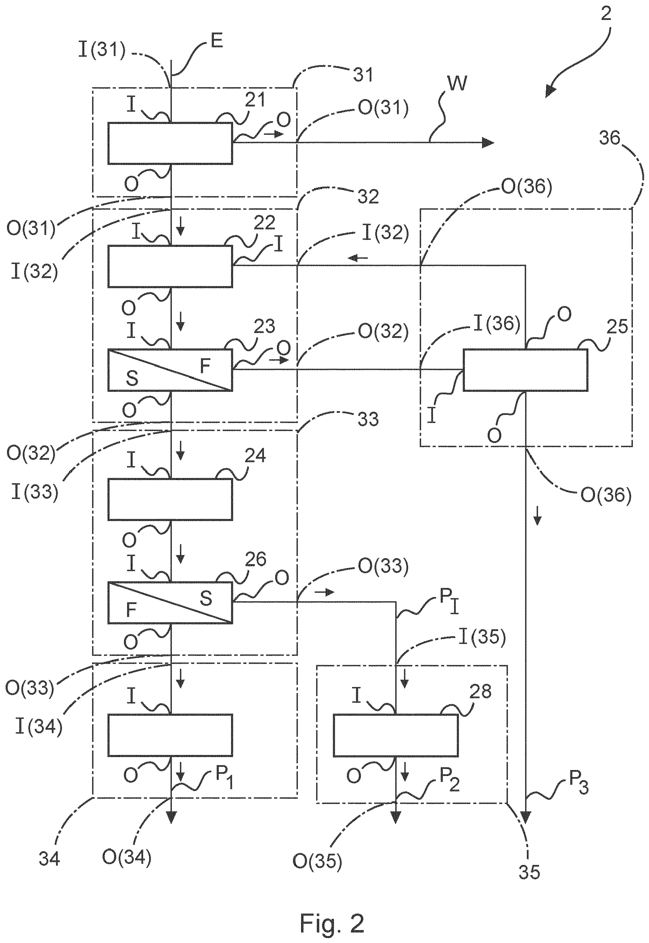

Figure 2 shows an exemplary flow chart 2 of an industrial process that comprises eight actions 21-28 with respective educt inputs I and product outputs O. The process as a whole takes in one educt E and outputs three products P₁, P₂ and P₃, as well as waste W. In Figure 2, the flow chart 2 has already been decomposed into functional units 31-36.

Functional unit 31 comprises a sieving or other separation action 21 of the educt E. One output O of this action 21 is waste W. The other output O of action 21 is fed into functional unit 32.

Functional unit 32 comprises a leaching action 22 for 20 minutes at a temperature of 20°C and a separation action 23 of solid S from fluid F. The leaching action 22 has two inputs I, namely one coming from the separation action 21 and one comprising the to-be-recycled fluid from distillation action 25. The output O of the leaching action 22 is fed into the separation action 23, which has one output O for the solid S and one output O for the fluid F. The fluid F is fed into distillation action 25, whereas the solid S is fed into the next leaching action 24.

Functional unit 33 comprises this next leaching action 24 for 3 hours at a temperature of 95°C and a subsequent solid-fluid separation action 26. The solid S coming from this further separation action 26 is an intermediate product P_{I} that goes into heating action 28. The fluid F coming from the further separation action 26 goes into heating action 27.

Functional unit 34 comprises heating action 27 to at least 1500°C that yields product P₁. Functional unit 35 comprises the heating action 28 of intermediate product P_{I} to at least 1200°C that yields product P₂.

Fucntional unit 36 comprises the distillation action 25 that separates the fluid F coming from separation action 23 into product P₃ on the one hand and a to-be-recycled fluid, to be fed back into the leaching action 22, on the other hand.

Figure 2 also showes the inputs I(31)-I(36) and outputs 0(31)-0(36) of the functional units 31-36.

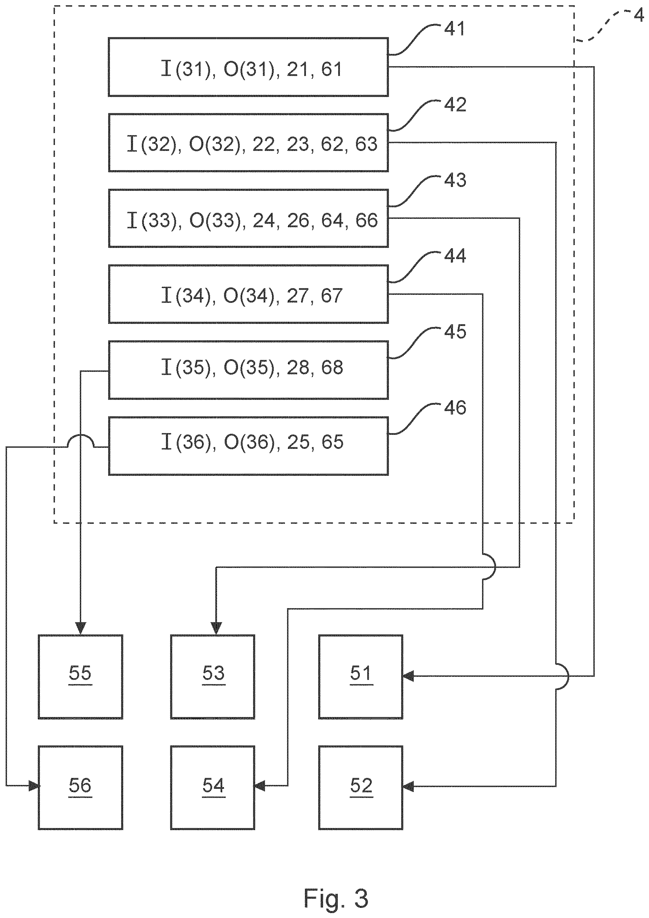

Figure 3 shows an exemplary catalogue 4 of module descriptions 41-46 corresponding to physical process modules 51-56 that may be used to realize the functionalities of functional units 31-36. In this toy example, there is a one-to-one relationship between functional units 31-36 and module descriptions 41-46. Typically, there will be many more module descriptions 41-46 in the catalogue 4 than there are functional units 31-36 in the flow chart 2.

Module description 41 corresponds to physical process module 51. It stipulates an input that matches to input I(31) of functional unit 31, outputs that match to outputs O(31) of functional unit 31, an action that matches action 21 of functional unit 31, and constraints 61 that have to be met when performing this action 21.

Module description 42 corresponds to physical process module 52. It stipulates inputs that match to inputs 1(32) of functional unit 32, outputs that match to outputs O(32) of functional unit 32, actions that match actions 22 and 23 of functional unit 32, and constraints 62 and 63 that have to be met when performing these actions 22 and 23.

Module description 43 corresponds to physical process module 53. It stipulates an input that matches to input I(33) of functional unit 33, outputs that match to outputs O(33) of functional unit 33, actions that match actions 24 and 26 of functional unit 33, and constraints 64 and 66 that have to be met when performing these actions 24 and 26.

Module description 44 corresponds to physical process module 54. It stipulates an input that matches to input I(34) of functional unit 34, an output that matches to output O(34) of functional unit 34, an action that matches action 27 of functional unit 34, and constraints 67 that have to be met when performing action 27.

Module description 45 corresponds to physical process module 55. It stipulates an input that matches to input I(35) of functional unit 35, an output that matches to output O(35) of functional unit 35, an action that matches action 28 of functional unit 35, and constraints 68 that have to be met when performing action 28.

Module description 46 corresponds to physical process module 56. It stipulates an input that matches to input I(36) of functional unit 36, outputs that match to outputs O(36) of functional unit 36, an action that matches action 25 of functional unit 36, and constraints 65 that have to be met when performing action 25.

There may well be multiple physical process modules 51-56 that have the same inputs and outputs and perform the same actions, but differ solely in the constraints that have to be met when performing those actions.

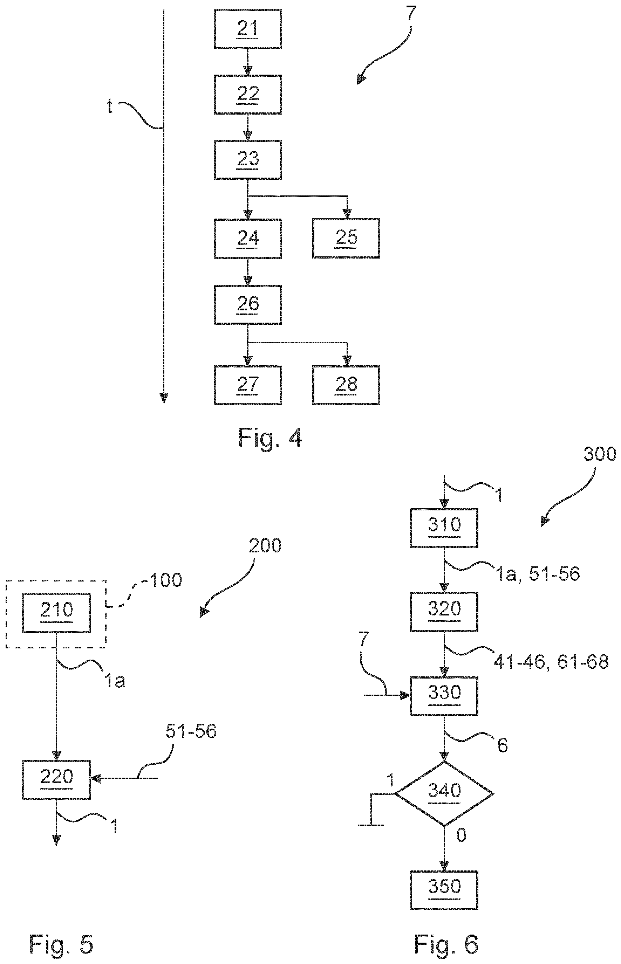

Figure 4 shows an exemplary temporal sequence 7 of actions 21-28. After the separation actions 23 and 26, the respective fluid F and solid S outcomes are independent from one another, so that their respective treatments (leaching 24 of solid S from action 23 and distillation 25 of fluid F from action 23; heating 27 of fluid F from action 26 and heating 28 of solid S from action 27) may be performed in parallel.

Figure 5 is a flow chart of an exemplary embodiment of the method 200 for manufacturing an industrial plant 1. In step 210 of the method 200, a construction plan 1a of the plant 1 is generated according to method 100. In step 220, the physical process modules 51-56 are connected according to this construction plan, so that the desired modular industrial plant 1 results.

Figure 6 is a flow chart of an exemplary embodiment of the method 300 for verifying the feasibility of a temporal execution sequence 7 of actions 21-28.

In step 310, a construction plan 1a that denotes the physical process modules 51-56 and their interconnections is obtained. In step 320, the module descriptions 41-46 corresponding to these physical process modules 51-56 are obtained. Inter alia, these module descriptions 41-46 comprise the constraints 61-68 that have to be met when performing actions 21-28.

In step 330, the constraints 61-68 are assembled into a timeline 6, based on the temporal execution sequence 7. In step 340, it is determined whether the timeline contains contradictory constraints 61-68 for any point in time. If this is not the case, in step 350, it is determined that the temporal execution sequence 7 is feasible.

### List of reference signs

- 1: modular industrial plant
- 1a: construction plan for plant 1
- 2: flow chart of process to be executed by plant 1
- 21-28: actions making up to-be-executed process
- 31-36: functional units of process
- 4, 4a, 4b: catalogues of module descriptions
- 41-46: descriptions of physical process modules 51-56
- 41'-46': priorities of actions 41-46
- 51-56: physical process modules
- 6: timeline of constraints 61-68
- 61-68: constraints that have to be met when performing actions 21-28
- 7: temporal execution sequence of actions 21-28
- 100: method for generating construction plan 1a
- 110: providing flow chart 2
- 120: providing catalogue 4
- 130: decomposing flow chart 2 into functional units 31-36
- 140: searching catalogue 4 for matching module descriptions 41-46
- 141: searching catalogue 4a of readily-available modules 51-56
- 142: searching catalogue 4b of harder-to-obtain modules 51-56
- 143: decomposing functional unit 31-36 into smaller units
- 144: searching catalogue 4 according to smaller units
- 145: checking condition for delay or cost of use of a module 51-56
- 146: determining replacement for module 51-56
- 147: determining if multiple matches are found for functional unit 31-36
- 147a: assining priorities 41'-46' to multiple module descriptions 41-46
- 147b: choosing module 51-56 according to highest priority 41'-46'
- 148: determining functional match with insufficient quantity flow
- 149: entering parallel arrangement into construction plan 1a
- 150: inserting physical process modules 51-56 into construction plan 1a
- 160: determining that plant 1 will use modules 51-56 due to plan 1a
- 160a: setting in-use flag for used modules 51-56 to True
- 170: determining that modules 51-56 are available for use again
- 170a: setting in-use flag for released modules 51-56 to False
- 180: creating temporal sequence 7 of actions 21-28
- 181: checking whether contradictory constraints 61-68 exist
- 182: determining pairs of compatible actions 21-28
- 200: method for manufacturing industrial plant 1
- 210: generating construction plan 1a according to method 100
- 220: physically connecting physical process modules 51-56
- 300: method for verifying feasibility of execution sequence 7
- 310: obtaining construction plan 1a
- 320: obtaining module descriptions 41-46
- 330: generating interconnections of modules 51-56 from sequence 7
- 340: determining whether contradictory constraints 61-68 exist
- 350: determining that sequence 7 is feasible
- E: educt
- I: input
- O: output
- P₁-P₃: products
- P_{I}: intermediate product
- t: time
- W: waste

## Claims

1. A computer-implemented method (100) for generating a construction plan (1a) for a modular plant (1) that is to execute a given industrial process, said construction plan (1a) being a plan for realizing the plant by interconnecting physical process modules, and said method (100) comprising the following steps:
• providing (110) a flow chart (2) of the industrial process, said flow chart (2) comprising a sequence of actions (21-28), wherein each action (21-28) has at least one input (I) for an educt to be processed by the action (21-28) and at least one output (O) for a product produced by the action (21-28), and wherein at least one product of one action (21-28) is an educt for another action (21-28);
• providing (120) at least one catalogue (4) of module descriptions (41-46), wherein each module description (41-46) characterizes at least the educt inputs (I) and the product outputs (O) of at least one physical process module (51-56), as well as the physical actions performed within the physical process module (51-56);
• decomposing (130) the flow chart (2) into functional units (31-36) with at least one educt input (I), at least one product output (O) and one or more actions (21-28) leading from the one or more educts to the one or more products, wherein at least one functional unit (31-36) comprises more than one action (21-28), and if no module description (41-46) corresponding to this functional unit (31-36) is found in the catalogue (4), this functional unit (31-36) is further decomposed (143) into at least two smaller functional units (31-36), and the catalogue (4) is searched (144) for module descriptions (41-46) corresponding to these smaller functional units (31-36);
• searching (140) the at least one catalogue (4) for module descriptions (41-46) that match to functional units (31-36) in the sense that the process module (51-56) to which the module description (41-46) pertains is physically able to convert the at least one educt of the functional unit (31-36) to the product of the functional unit (31-36) by means of the one or more actions (21-28) of the functional unit (31-36); and
• for each functional unit (31-36) for which at least one matching module description (41-46) is found, inserting (150), into the construction plan (la), the corresponding physical process module (51-56), wherein the physical process modules (51-56) are interconnected like the functional units (31-36) to which they correspond.

2. The method (100) of claim 1, wherein the searching (140) is first performed (141) in a first catalogue (4, 4a) of module descriptions (41-46) corresponding to physical process modules (51-56) that are available with a first shorter delay, and/or at a first lower cost, and if no module description (41-46) matching a particular functional unit (31-36) is found, the searching (140) moves on (142) to a second catalogue (4, 4b) of module descriptions (41-46) corresponding to physical process modules (51-56) that are available with a second longer delay, and/or at a second higher cost.

3. The method (100) of any one of claims 1 to 2, further comprising: in response to determining (145) that the delay, and/or the cost, for obtaining a particular physical process module (51-56) fulfils a predetermined condition, determining (146) whether this physical process module (51-56) can be replaced by another physical process module (51-56), or a combination of physical process modules (51-56), that has the same educt inputs (I) and the same product outputs (O), and that is physically able to perform the actions of said particular physical process module (51-56).

4. The method (100) of any one of claims 1 to 3, further comprising: if multiple module descriptions (41-46) matching to the same functional unit (31-36) are found (147) in the catalogue (4), assigning (147a) priorities (41'-46') to these module descriptions (41-46) according to at least one predetermined criterion, and choosing (147b) the physical process module (51-56) corresponding to the module description (41-46) with the highest priority (41'-46') for including in the construction plan (1a).

5. The method (100) of claim 4, wherein the priority (41'-46') is based at least in part on one or more of:
• the cost of the use of the physical process module (51-56),
• the delay for obtaining the physical process module (51-56),
• the mean time between failures, MTBF, of the physical process module (51-56),
• the mean time to failure, MTTF, of the physical process module (51-56), and
• an intention to use same-type modules (51-56) for similar purposes throughout the plant (1).

6. The method (100) of any one of claims 4 to 5, wherein the priority (41'-46') decreases as at least one quantitative capability of the physical process module (51-56) exceeds a requirement of the functional unit (31-36) for this capability.

7. The method (100) of any one of claims 1 to 6, wherein at least one module description (31-36) comprises limits for a quantity flow of at least one educt and/or product, and wherein the flow chart (2) comprises limits for a quantity flow of at least one educt and/or product with respect to at least one functional unit (31-36).

8. The method (100) of claim 7, further comprising: in response to determining (148) that at least one module description (41-46) matches to a functional unit (31-36) with respect to educt inputs (I), product outputs (O) and ability to convert, but a maximum quantity flow of the module (51-56) to which the module description (41-46) pertains is less than a minimum quantity flow requirement for the functional unit (31-36), entering (149), into the construction plan (la), with respect to this functional unit (31-36), a parallel arrangement of multiple physical process modules (51-56) having the same educt inputs (I), product outputs (O), and ability to convert.

9. The method (100) of any one of claims 1 to 8, wherein the module descriptions (41-46) further comprise a Boolean in-use indicator, wherein the searching (140) is limited to module descriptions where the value of the in-use indicator is False, and wherein the method further comprises:
• in response to determining (160) that the plant (1) is to be built according to the construction plan (la), setting (160a) the in-use indicator in all module descriptions (41-46) corresponding to the physical process modules (51-56) contained in the construction plan (1a) to True; and
• in response to determining (170) that use of the plant (1) is discontinued and the physical process modules (51-56) that make up the plant (1) are available for use again, setting (170a) the in-use indicator in all module descriptions (41-46) corresponding to these physical process modules (51-56) to False.

10. The method (100) of any one of claims 1 to 9, wherein the flow chart (2), and/or at least one module description (41-46), comprises a time required for completing at least one action (21-28).

11. The method (100) of any one of claims 1 to 10, wherein the method further comprises creating (180), from the construction plan (la), a temporal execution sequence (7) of the actions (21-28).

12. The method (100) of claim 11, wherein the catalogue (4) comprises module descriptions (41-46) that contain, for each action (21-28) performed by the corresponding physical process module (51-56), constraints (61-68) as to an educt input (I), a product output (O), an internal state of the physical process module (51-56), or a state of the plant (1) as a whole, that have to be met while each action (21-28) of the physical process module (51-56) is being performed.

13. The method (100) of claim 12, further comprising:
• determining (181), for each pair of a first action (21-28) performed by a first physical process module (51-56) and a second action (21-28) performed by the first physical process module (51-56), and/or by a second physical process module (51-56) connected to the first physical process module (51-56), whether the constraints (61-68) required by both actions (21-28) are contradictory; and
• in response to determining (181) that the constraints (61-68) are not contradictory, adding (182) the pair of the two actions (21-28) to a positive list of pairs of actions (21-28) that are available for creation of the temporal execution sequence (7).

14. A method (200) for manufacturing an industrial plant (1) to execute a given industrial process, comprising the following steps:
• generating (210) a construction plan (1a) for the industrial plant (1) using the method (100) of any one of claims 1 to 13; and
• physically connecting (220) the physical process modules (51-56) contained in the generated construction plan (la), so that the industrial plant (1) results.

15. A computer-implemented method (300) for verifying the feasibility of a given temporal execution sequence (7) of actions (21-28) in a given industrial plant (1), said industrial plant (1) consisting of a plurality of physical process modules (51-56), each physical process module (51-56) having at least one educt input (I), at least one product output (O) and being able to perform at least one action (21-28) to convert the at least one educt into the at least one product, the method (300) comprising the steps of:
• obtaining (310), by the method (100) of any one of claims 1 to 11, a construction plan (1a) of the plant (1) that contains the physical process modules (51-56) and their interconnections;
• obtaining (320), for each physical process module (51-56), a module description (41-46) that contains, for each action (21-28) performed by the physical process module (51-56), constraints (61-68) as to an educt input (I), a product output (O), an internal state of the physical process module (51-56), or a state of the plant (1) as a whole, that have to be met while each action of the physical process module (51-56) is being performed;
• generating (330), from the temporal execution sequence (7) of actions, the interconnections in the construction plan (la), and the module descriptions (41-46), a timeline (6) of the constraints (61-68) that have to be met;
• determining (340) whether the timeline (6) contains contradictory constraints (61-68) for any point in time; and
• if the timeline (6) contains no such contradictory constraints (61-68), determining (350) that the given temporal execution sequence (7) is feasible.

16. The method (100, 300) of any one of claims 12, 13, or 15, wherein the constraints (61-68) comprise one or more of:
• a temperature, pressure, mass flow, state of matter or chemical composition of an educt, a product or any other intermediate medium that is obtained during an action (21-28) leading from the educt to the product;
• a switching state of a switch or a valve of the physical process module (51-56);
• a movable state of a movable member within the physical process module (51-56);
• a maximum consumption rate of any consumable by the physical process module (51-56), and/or by the plant (1) as a whole;
• an environmental condition within the physical process module (51-56), and/or within the plant (1) as a whole.

17. A computer program, comprising machine-readable instructions that, when executed by one or more computers, and/or an industrial control system, cause the one or more computers, and/or the industrial control system, to perform a method (100, 200, 300) of any one of claims 1 to 13 or 15 to 16.

18. A non-transitory computer storage medium, and/or a download product, with the computer program of claim 17.

## Patentansprüche

1. Computerimplementiertes Verfahren (100) zum Erzeugen eines Konstruktionsplans (1a) für eine modulare Anlage (1), die einen gegebenen industriellen Prozess ausführen soll, wobei der Konstruktionsplan (1a) ein Plan zum Realisieren der Anlage durch Verbinden physikalischer Prozessmodule ist und wobei das Verfahren (100) die folgenden Schritte umfasst:
• Bereitstellen (110) eines Flussdiagramms (2) des industriellen Prozesses, wobei das Flussdiagramm (2) eine Sequenz von Aktionen (21-28) umfasst, wobei jede Aktion (21-28) mindestens eine Eingabe (I) für ein durch die Aktion (21-28) zu verarbeitendes Edukt und mindestens eine Ausgabe (O) für ein durch die Aktion (21-28) produziertes Produkt aufweist und wobei mindestens ein Produkt einer Aktion (21-28) ein Edukt für eine andere Aktion (21-28) ist;
• Bereitstellen (120) mindestens eines Katalogs (4) von Modulbeschreibungen (41-46), wobei jede Modulbeschreibung (41-46) zumindest die Edukteingaben (I) und die Produktausgaben (O) mindestens eines physikalischen Prozessmoduls (51-56) sowie die in dem physikalischen Prozessmodul (51-56) durchgeführten physikalischen Aktionen charakterisiert;
• Unterteilen (130) des Flussdiagramms (2) in Funktionseinheiten (31-36) mit mindestens einer Edukteingabe (I), mindestens einer Produktausgabe (O) und einer oder mehreren Aktionen (21-28), die von dem einen oder den mehreren Edukten zu dem einen oder den mehreren Produkten führen, wobei mindestens eine Funktionseinheit (31-36) mehr als eine Aktion (21-28) umfasst, und wenn keine dieser Funktionseinheit (31-36) entsprechende Modulbeschreibung (41-46) in dem Katalog (4) gefunden wird, diese Funktionseinheit (31-36) weiter in mindestens zwei kleinere Funktionseinheiten (31-36) unterteilt wird (143) und der Katalog (4) nach Modulbeschreibungen (41-46), die diesen kleineren Funktionseinheiten (31-36) entsprechen, durchsucht wird (144);
• Durchsuchen (140) des mindestens einen Katalogs (4) nach Modulbeschreibungen (41-46), die in dem Sinne mit Funktionseinheiten (31-36) übereinstimmen, dass das Prozessmodul (51-56), auf das sich die Modulbeschreibung (41-46) bezieht, physikalisch dazu in der Lage ist, das mindestens eine Edukt der Funktionseinheit (31-36) mittels der einen oder der mehreren Aktionen (21-28) der Funktionseinheit (31-36) in das Produkt der Funktionseinheit (31-36) umzuwandeln; und
• für jede Funktionseinheit (31-36), für die mindestens eine übereinstimmende Modulbeschreibung (41-46) gefunden wird, Einfügen (150), in den Konstruktionsplan (1a), des entsprechenden physikalischen Prozessmoduls (51-56), wobei die physikalischen Prozessmodule (51-56) wie die Funktionseinheiten (31-36), denen sie entsprechen, miteinander verbunden sind.

2. Verfahren (100) nach Anspruch 1, wobei das Durchsuchen (140) zuerst in einem ersten Katalog (4, 4a) von Modulbeschreibungen (41-46) durchgeführt wird (141), die physikalischen Prozessmodulen (51-56) entsprechen, die mit einer ersten kürzeren Verzögerung und/oder zu ersten geringeren Kosten verfügbar sind, und wenn keine mit einer bestimmten Funktionseinheit (31-36) übereinstimmende Modulbeschreibung (41-46) gefunden wird, das Durchsuchen (140) zu einem zweiten Katalog (4, 4b) von Modulbeschreibungen (41-46) übergeht (142), die physikalischen Prozessmodulen (51-56) entsprechen, die mit einer zweiten längeren Verzögerung und/oder zu zweiten höheren Kosten verfügbar sind.

3. Verfahren (100) nach einem der Ansprüche 1 bis 2, das ferner Folgendes umfasst: als Reaktion auf Bestimmen (145), dass die Verzögerung und/oder die Kosten zum Erhalten eines bestimmten physikalischen Prozessmoduls (51-56) eine vorbestimmte Bedingung erfüllen, Bestimmen (146), ob dieses physikalische Prozessmodul (51-56) durch ein anderes physikalisches Prozessmodul (51-56) oder eine Kombination aus physikalischen Prozessmodulen (51-56) ersetzt werden kann, das bzw. die die gleichen Edukteingaben (I) und die gleichen Produktausgaben (O) aufweist und das bzw. die physikalisch in der Lage ist, die Aktionen des bestimmten physikalischen Prozessmoduls (51-56) durchzuführen.

4. Verfahren (100) nach einem der Ansprüche 1 bis 3, weiterhin umfassend: wenn mehrere mit derselben Funktionseinheit (31-36) übereinstimmende Modulbeschreibungen (41-46) in dem Katalog (4) gefunden werden (147), Zuweisen (147a) von Prioritäten (41'-46') zu diesen Modulbeschreibungen (41-46) gemäß mindestens einem vorbestimmten Kriterium, und Auswählen (147b) des physikalischen Prozessmoduls (51-56), das der Modulbeschreibung (41-46) mit der höchsten Priorität (41'-46') entspricht, zur Aufnahme in den Konstruktionsplan (1a).

5. Verfahren (100) nach Anspruch 4, wobei die Priorität (41'-46') zumindest teilweise auf einem oder mehreren der Folgenden basiert:
• den Kosten der Verwendung des physikalischen Prozessmoduls (51-56),
• der Verzögerung zum Erhalten des physikalischen Prozessmoduls (51-56),
• der mittleren Betriebsdauer zwischen Ausfällen, MTBF, des physikalischen Prozessmoduls (51-56),
• der mittleren Betriebsdauer bis zum Ausfall, MTTF, des physikalischen Prozessmoduls (51-56), und
• einer Absicht zur Verwendung gleichartiger Module (51-56) für ähnliche Zwecke in der gesamten Anlage (1).

6. Verfahren (100) nach einem der Ansprüche 4 bis 5, wobei die Priorität (41'-46') geringer wird, wenn mindestens eine quantitative Fähigkeit des physikalischen Prozessmoduls (51-56) eine Anforderung der Funktionseinheit (31-36) für diese Fähigkeit überschreitet.

7. Verfahren (100) nach einem der Ansprüche 1 bis 6, wobei mindestens eine Modulbeschreibung (31-36) Grenzen für einen Mengenstrom mindestens eines Edukts und/oder Produkts umfasst und wobei das Flussdiagramm (2) Grenzen für einen Mengenstrom mindestens eines Edukts und/oder Produkts hinsichtlich mindestens einer Funktionseinheit (31-36) umfasst.

8. Verfahren (100) nach Anspruch 7, das ferner Folgendes umfasst: als Reaktion auf Bestimmen (148), dass mindestens eine Modulbeschreibung (41-46) hinsichtlich Edukteingaben (I), Produktausgaben (O) und Umwandlungsfähigkeit mit einer Funktionseinheit (31-36) übereinstimmt, jedoch ein maximaler Mengenstrom des Moduls (51-56), auf das sich die Modulbeschreibung (41-46) bezieht, geringer als eine Mengenstrom-Mindestanforderung für die Funktionseinheit (31-36) ist, Eingeben (149), in den Konstruktionsplan (1a), hinsichtlich dieser Funktionseinheit (31-36), einer parallelen Anordnung mehrerer physikalischer Prozessmodule (51-56) mit den gleichen Edukteingaben (I), Produktausgaben (O) und der gleichen Umwandlungsfähigkeit.

9. Verfahren (100) nach einem der Ansprüche 1 bis 8, wobei die Modulbeschreibungen (41-46) ferner einen Booleschen In-Verwendung-Indikator umfassen, wobei das Durchsuchen (140) auf die Modulbeschreibungen begrenzt wird, in denen der Wert des In-Verwendung-Indikators Unwahr ist, und wobei das Verfahren ferner Folgendes umfasst:
• als Reaktion auf Bestimmen (160), dass die Anlage (1) gemäß dem Konstruktionsplan (1a) gebaut werden soll, Setzen (160a) des In-Verwendung-Indikators in allen Modulbeschreibungen (41-46), die den in dem Konstruktionsplan (1a) enthaltenen physikalischen Prozessmodulen (51-56) entsprechen, auf Wahr; und
• als Reaktion auf Bestimmen (170), dass eine Verwendung der Anlage (1) unterbrochen wird und die physikalischen Prozessmodule (51-56), die die Anlage (1) bilden, wieder zur Verwendung verfügbar sind, Setzen (170a) des In-Verwendung-Indikators in allen Modulbeschreibungen (41-46), die diesen physikalischen Prozessmodulen (51-56) entsprechen, auf Unwahr.

10. Verfahren (100) nach einem der Ansprüche 1 bis 9, wobei das Flussdiagramm (2) und/oder mindestens eine Modulbeschreibung (41-46) eine zum Durchführen mindestens einer Aktion (21-28) benötigte Zeit umfassen.

11. Verfahren (100) nach einem der Ansprüche 1 bis 10, wobei das Verfahren ferner Erstellen (180), anhand des Konstruktionsplans (1a), einer zeitlichen Ausführungssequenz (7) der Aktionen (21-28) umfasst.

12. Verfahren (100) nach Anspruch 11, wobei der Katalog (4) Modulbeschreibungen (41-46) umfasst, die für jede durch das entsprechende physikalische Prozessmodul (51-56) durchgeführte Aktion (21-28) Beschränkungen (61-68) hinsichtlich einer Edukteingabe (I), einer Produktausgabe (O), eines internen Zustands des physikalischen Prozessmoduls (51-56) oder eines Zustands der Anlage (1) als Ganzes enthalten, die erfüllt werden müssen, während jede Aktion (21-28) des physikalischen Prozessmoduls (51-56) durchgeführt wird.

13. Verfahren (100) nach Anspruch 12, das ferner Folgendes umfasst:
• Bestimmen (181), für jedes Paar aus einer ersten Aktion (21-28), die durch ein erstes physikalisches Prozessmodul (51-56) durchgeführt wird, und einer zweiten Aktion (21-28), die durch das erste physikalische Prozessmodul (51-56) und/oder durch ein mit dem ersten physikalischen Prozessmodul (51-56) verbundenes zweites physikalisches Prozessmodul (51-56) durchgeführt wird, ob sich die durch beide Aktionen (21-28) erforderten Beschränkungen (61-68) widersprechen; und
• als Reaktion auf Bestimmen (181), dass sich die zwei Beschränkungen (61-68) nicht widersprechen, Hinzufügen (182) des Paars aus den zwei Aktionen (21-28) zu einer Positiv-Liste von Paaren aus Aktionen (21-28), die zur Erstellung der zeitlichen Ausführungssequenz (7) verfügbar sind.

14. Verfahren (200) zum Herstellen einer industriellen Anlage (1) zum Ausführen eines gegebenen industriellen Prozesses, das die folgenden Schritte umfasst:
• Erzeugen (210) eines Konstruktionsplans (1a) für die industrielle Anlage (1) unter Verwendung des Verfahrens (100) nach einem der Ansprüche 1 bis 13; und
• physisches Verbinden (220) der in dem erzeugten Konstruktionsplan (1a) enthaltenen physikalischen Prozessmodule (51-56), sodass die industrielle Anlage (1) resultiert.

15. Computerimplementiertes Verfahren (300) zum Verifizieren der Umsetzbarkeit einer gegebenen zeitlichen Ausführungssequenz (7) von Aktionen (21-28) in einer gegebenen industriellen Anlage (1), wobei die industrielle Anlage (1) aus mehreren physikalischen Prozessmodulen (51-56) besteht, wobei jedes physikalische Prozessmodul (51-56) mindestens eine Edukteingabe (I), mindestens eine Produktausgabe (O) aufweist und dazu in der Lage ist, mindestens eine Aktion (21-28) zum Umwandeln des mindestens einen Edukts in das mindestens eine Produkt durchzuführen, wobei das Verfahren (300) die folgenden Schritte umfasst:
• Erhalten (310), mittels des Verfahrens (100) nach einem der Ansprüche 1 bis 11, eines Konstruktionsplans (1a) der Anlage (1), der die physikalischen Prozessmodule (51-56) und ihre Verbindungen enthält;
• Erhalten (320), für jedes physikalische Prozessmodul (51-56), einer Modulbeschreibung (41-46), die für jede durch das physikalische Prozessmodul (51-56) durchgeführte Aktion (21-28) Beschränkungen (61-68) hinsichtlich einer Edukteingabe (I), einer Produktausgabe (O), eines internen Zustands des physikalischen Prozessmoduls (51-56) oder eines Zustands der Anlage (1) als Ganzes enthält, die erfüllt werden müssen, während jede Aktion des physikalischen Prozessmoduls (51-56) durchgeführt wird;
• Erzeugen (330), anhand der zeitlichen Ausführungssequenz (7) von Aktionen, der Verbindungen in dem Konstruktionsplan (1a) und der Modulbeschreibungen (41-46), einer Zeitlinie (6) der Beschränkungen (61-68), die erfüllt werden müssen;
• Bestimmen (340), ob die Zeitlinie (6) für einen beliebigen Zeitpunkt widersprüchliche Beschränkungen (61-68) enthält; und
• wenn die Zeitlinie (6) keine solchen widersprüchlichen Beschränkungen (61-68) enthält, Bestimmen (350), dass die gegebene zeitliche Ausführungssequenz (7) umsetzbar ist.

16. Verfahren (100, 300) nach einem der Ansprüche 12, 13 oder 15, wobei die Beschränkungen (61-68) eines oder mehrere der Folgenden umfassen:
• eine Temperatur, einen Druck, einen Massestrom, einen Aggregatzustand oder eine chemische Zusammensetzung eines Edukts, eines Produkts oder eines beliebigen anderen Zwischenmediums, das während einer Aktion (21-28) erhalten wird, die von dem Edukt zu dem Produkt führt;
• einen Schaltzustand eines Schalters oder eines Ventils des physikalischen Prozessmoduls (51-56);
• einen bewegbaren Zustand eines bewegbaren Glieds in dem physikalischen Prozessmodul (51-56);
• eine maximale Verbrauchsrate jeglicher Verbrauchsmaterialien durch das physikalische Prozessmodul (51-56) und/oder die Anlage (1) als Ganzes;
• eine Umgebungsbedingung in dem physikalischen Prozessmodul (51-56) und/oder in der Anlage (1) als Ganzes.

17. Computerprogramm, das maschinenlesbare Anweisungen umfasst, die bei Ausführung durch einen oder mehrere Computer und/oder ein industrielles Steuersystem bewirken, dass der eine oder die mehreren Computer und/oder das industrielle Steuersystem ein Verfahren (100, 200, 300) nach einem der Ansprüche 1 bis 13 oder 15 bis 16 durchführt.

18. Nicht-flüchtiges Computerspeichermedium und/oder Download-Produkt mit dem Computerprogramm nach Anspruch 17.

## Revendications

1. Procédé mis en œuvre par ordinateur (100) pour générer un plan de construction (1a) pour une installation modulaire (1) qui doit exécuter un processus industriel donné, ledit plan de construction (1a) étant un plan pour réaliser l'installation en interconnectant des modules de processus physiques, et ledit procédé (100) comprenant les étapes suivantes :
• fournir (110) un schéma de procédé (2) du processus industriel, ledit schéma de procédé (2) comprenant une séquence d'actions (21-28), où chaque action (21-28) a au moins une entrée (I) pour un éduit à traiter par l'action (21-28) et au moins une sortie (O) pour un produit fabriqué par l'action (21-28), et où au moins un produit d'une action (21-28) est un éduit pour une autre action (21-28) ;
• fournir (120) au moins un catalogue (4) de descriptions de modules (41-46), où chaque description de module (41-46) caractérise au moins les entrées d'éduit (I) et les sorties de produit (O) d'au moins un module de processus physique (51-56), ainsi que les actions physiques réalisées dans le module de processus physique (51-56) ;
• décomposer (130) le schéma de procédé (2) en unités fonctionnelles (31-36) avec au moins une entrée d'éduit (I), au moins une sortie de produit (O) et une ou plusieurs actions (21-28) menant des un ou plusieurs éduits aux un ou plusieurs produits, où au moins une unité fonctionnelle (31-36) comprend plus d'une action (21-28), et si aucune description de module (41-46) correspondant à cette unité fonctionnelle (31-36) n'est trouvée dans le catalogue (4), cette unité fonctionnelle (31-36) est décomposée (143) en outre en au moins deux unités fonctionnelles (31-36) plus petites, et on recherche (144) dans le catalogue (4) des descriptions de modules (41-46) correspondant à ces unités fonctionnelles (31-36) plus petites ;
• rechercher (140) dans l'au moins un catalogue (4) des descriptions de modules (41-46) qui correspondent à des unités fonctionnelles (31-36) dans le sens où le module de processus (51-56) auquel la description de module (41-46) se rapporte est physiquement capable de convertir l'au moins un éduit de l'unité fonctionnelle (31-36) en le produit de l'unité fonctionnelle (31-36) au moyen des une ou plusieurs actions (21-28) de l'unité fonctionnelle (31-36) ; et
• pour chaque unité fonctionnelle (31-36) pour laquelle au moins une description de module correspondante (41-46) est trouvée, insérer (150), dans le plan de construction (la), le module de processus physique correspondant (51-56), où les modules de processus physiques (51-56) sont interconnectés comme les unités fonctionnelles (31-36) auxquelles ils correspondent.

2. Procédé (100) selon la revendication 1, dans lequel la recherche (140) est d'abord effectuée (141) dans un premier catalogue (4, 4a) de descriptions de modules (41-46) correspondant aux modules de processus physiques (51-56) qui sont disponibles avec un premier délai plus court, et/ou à un premier coût inférieur et, si aucune description de module (41-46) correspondant à une unité fonctionnelle particulière (31-36) n'est trouvée, la recherche (140) passe (142) à un deuxième catalogue (4, 4b) de descriptions de modules (41-46) correspondant à des modules de processus physiques (51-56) qui sont disponibles avec un deuxième délai plus long, et/ou à un deuxième coût plus élevé.

3. Procédé (100) selon l'une quelconque des revendications 1 et 2, comprenant en outre : en réponse à la détermination (145) que le délai, et/ou le coût, pour obtenir un module de processus physique particulier (51-56) remplit une condition prédéterminée, de déterminer (146) si ce module de processus physique (51-56) peut, ou non, être remplacé par un autre module de processus physique (51-56), ou une combinaison de modules de processus physiques (51-56), qui a les mêmes entrées d'éduit (I) et les mêmes sorties de produit (O), et qui est physiquement capable d'effectuer les actions dudit module de processus physique particulier (51-56).

4. Procédé (100) selon l'une quelconque des revendications 1 à 3, comprenant en outre : si de multiples descriptions de modules (41-46) correspondant à la même unité fonctionnelle (31-36) sont trouvées (147) dans le catalogue (4), attribuer (147a) des priorités (41'-46') à ces descriptions de modules (41-46) en fonction d'au moins un critère prédéterminé, et choisir (147b) le module de processus physique (51-56) correspondant à la description de module (41-46) avec la priorité la plus élevée (41'-46') pour l'inclure dans le plan de construction (1a).

5. Procédé (100) selon la revendication 4, dans lequel la priorité (41'-46') est basée, au moins en partie, sur un ou plusieurs des éléments suivants :
• le coût de l'utilisation du module de processus physique (51-56),
• le délai pour obtenir le module de processus physique (51-56),
• le temps moyen entre les défaillances, MTBF, du module de processus physique (51-56),
• le temps moyen jusqu'à la défaillance, MTTF, du module de processus physique (51-56), et
• l'intention d'utiliser des modules de même type (51-56) à des fins similaires dans l'ensemble de l'installation (1).

6. Procédé (100) selon l'une quelconque des revendications 4 à 5, dans lequel la priorité (41'-46') diminue lorsqu'au moins une capacité quantitative du module de processus physique (51-56) dépasse une exigence de l'unité fonctionnelle (31-36) pour cette capacité.

7. Procédé (100) selon l'une quelconque des revendications 1 à 6, dans lequel au moins une description de module (31-36) comprend des limites pour un flux de quantité d'au moins un éduit et/ou produit, et où le schéma de procédé (2) comprend des limites pour un flux de quantité d'au moins un éduit et/ou produit par rapport à au moins une unité fonctionnelle (31-36) .

8. Procédé (100) selon la revendication 7, comprenant en outre : en réponse à la détermination (148) qu'au moins une description de module (41-46) correspond à une unité fonctionnelle (31-36) en ce qui concerne les entrées d'éduit (I), les sorties de produit (O) et la capacité de conversion, mais qu'un flux de quantité maximum du module (51-56) auquel la description de module (41-46) se rapporte est inférieur à une exigence de flux de quantité minimum pour l'unité fonctionnelle (31-36), d'entrer (149), dans le plan de construction (1a), en ce qui concerne cette unité fonctionnelle (31-36), un arrangement parallèle de multiples modules de processus physiques (51-56) ayant les mêmes entrées d'éduit (I), sorties de produit (O), et capacité de conversion.

9. Procédé (100) selon l'une quelconque des revendications 1 à 8, dans lequel les descriptions de modules (41-46) comprennent en outre un indicateur booléen d'utilisation, où la recherche (140) est limitée aux descriptions de modules où la valeur de l'indicateur d'utilisation est Faux, et où le procédé comprend en outre les étapes suivantes :
• en réponse à la détermination (160) que l'installation (1) doit être construite selon le plan de construction (1a), régler (160a) l'indicateur d'utilisation dans toutes les descriptions de modules (41-46) correspondant aux modules de processus physiques (51-56) contenus dans le plan de construction (1a) sur Vrai ; et
• en réponse à la détermination (170) que l'utilisation de l'installation (1) est interrompue et que les modules de processus physiques (51-56) qui constituent l'installation (1) sont disponibles pour une nouvelle utilisation, régler (170a) l'indicateur d'utilisation dans toutes les descriptions de modules (41-46) correspondant à ces modules de processus physiques (51-56) sur Faux.

10. Procédé (100) selon l'une quelconque des revendications 1 à 9, dans lequel le schéma de procédé (2), et/ou au moins une description de module (41-46), comprennent un temps requis pour réaliser au moins une action (21-28).

11. Procédé (100) selon l'une quelconque des revendications 1 à 10, dans lequel le procédé comprend en outre la création (180), à partir du plan de construction (1a), d'une séquence d'exécution temporelle (7) des actions (21-28).

12. Procédé (100) selon la revendication 11, dans lequel le catalogue (4) comprend des descriptions de modules (41-46) qui contiennent, pour chaque action (21-28) exécutée par le module de processus physique correspondant (51-56), des contraintes (61-68) concernant une entrée d'éduit (I), une sortie de produit (O), un état interne du module de processus physique (51-56), ou un état de l'installation (1) dans son ensemble, qui doivent être satisfaites tandis que chaque action (21-28) du module de processus physique (51-56) est exécutée.

13. Procédé (100) selon la revendication 12, comprenant en outre les étapes suivantes :
• déterminer (181), pour chaque paire d'une première action (21-28) exécutée par un premier module de processus physique (51-56) et d'une deuxième action (21-28) exécutée par le premier module de processus physique (51-56), et/ou par un deuxième module de processus physique (51-56) connecté au premier module de processus physique (51-56), si les contraintes (61-68) requises par les deux actions (21-28) sont contradictoires ; et
• en réponse à la détermination (181) que les contraintes (61-68) ne sont pas contradictoires, ajouter (182) la paire des deux actions (21-28) à une liste positive de paires d'actions (21-28) qui sont disponibles pour la création de la séquence d'exécution temporelle (7).

14. Procédé (200) de fabrication d'une installation industrielle (1) pour exécuter un processus industriel donné, comprenant les étapes suivantes :
• générer (210) un plan de construction (1a) pour l'installation industrielle (1) en utilisant le procédé (100) de l'une quelconque des revendications 1 à 13 ; et
• connecter physiquement (220) les modules de processus physiques (51-56) contenus dans le plan de construction généré (1a), de sorte que l'installation industrielle (1) en résulte.

15. Procédé mis en œuvre par ordinateur (300) pour vérifier la faisabilité d'une séquence d'exécution temporelle donnée (7) d'actions (21-28) dans une installation industrielle donnée (1), ladite installation industrielle (1) étant constituée d'une pluralité de modules de processus physiques (51-56), chaque module de processus physique (51-56) ayant au moins une entrée d'éduit (I), au moins une sortie de produit (0) et étant capable d'effectuer au moins une action (21-28) pour convertir l'au moins un éduit en l'au moins un produit, le procédé (300) comprenant les étapes suivantes :
• obtenir (310), par le procédé (100) de l'une quelconque des revendications 1 à 11, un plan de construction (1a) de l'installation (1) qui contient les modules de processus physiques (51-56) et leurs interconnexions ;
• obtenir (320), pour chaque module de processus physique (51-56), une description de module (41-46) qui contient, pour chaque action (21-28) exécutée par le module de processus physique (51-56), des contraintes (61-68) concernant une entrée d'éduit (I), une sortie de produit (O), un état interne du module de processus physique (51-56), ou un état de l'installation (1) dans son ensemble, qui doivent être satisfaites tandis que chaque action du module de processus physique (51-56) est exécutée ;
• générer (330), à partir de la séquence d'exécution temporelle (7) des actions, des interconnexions dans le plan de construction (1a) et des descriptions des modules (41-46), une chronologie (6) des contraintes (61-68) qui doivent être satisfaites ;
• déterminer (340) si la chronologie (6) contient des contraintes contradictoires (61-68) pour tout point dans le temps ; et
• si la chronologie (6) ne contient pas de telles contraintes contradictoires (61-68), déterminer (350) que la séquence d'exécution temporelle donnée (7) est réalisable.

16. Procédé (100, 300) selon l'une quelconque des revendications 12, 13 ou 15, dans lequel les contraintes (61-68) comprennent un ou plusieurs des éléments suivants :
• une température, une pression, un débit massique, un état de la matière ou une composition chimique d'un éduit, d'un produit ou de tout autre milieu intermédiaire qui est obtenu pendant une action (21-28) menant de l'éduit au produit ;
• un état de commutation d'un commutateur ou d'une vanne du module de processus physique (51-56) ;
• un état de déplacement d'un élément mobile à l'intérieur du module de processus physique (51-56) ;
• un taux de consommation maximum de tout consommable par le module de processus physique (51-56), et/ou par l'installation (1) dans son ensemble ;
• une condition environnementale à l'intérieur du module de processus physique (51-56), et/ou à l'intérieur de l'installation (1) dans son ensemble.

17. Programme informatique comprenant des instructions lisibles par machine qui, lorsqu'elles sont exécutées par un ou plusieurs ordinateurs, et/ou un système de commande industriel, amènent les un ou plusieurs ordinateurs, et/ou le système de commande industriel, à exécuter un procédé (100, 200, 300) de l'une quelconque des revendications 1 à 13 ou 15 à 16.

18. Support de stockage informatique non transitoire et/ou produit de téléchargement contenant le programme informatique de la revendication 17.
